# EUROPEAN PATENT SPECIFICATION

(11) **EP 4 602 894 B1**
(45) Date of publication and mention of the grant of the patent: **15.04.2026**
(21) Application number: 23786074.7
(22) Date of filing: 09.10.2023
(51) Int. Cl.: H05B 47/13, H05B 47/115, H05B 47/125

(54) **A METHOD FOR PREVENTING VEHICLE BURGLARY OF ONE OR MORE VEHICLES IN A SURVEILLANCE AREA**
VERFAHREN ZUR VERHINDERUNG DES EINBRUCHS EINES ODER MEHRERER FAHRZEUGE IN EINEM ÜBERWACHUNGSBEREICH
PROCÉDÉ POUR EMPÊCHER L'EFFRACTION D'UN OU DE PLUSIEURS VÉHICULES DANS UNE ZONE DE SURVEILLANCE

(30) Priority: 10.10.2022 US 202263414675 P; 18.10.2022 EP 22202185
(43) Date of publication of application: 20.08.2025
(73) Proprietor: Signify Holding B.V., 5656 AE Eindhoven (NL)
(72) Inventor: DEIXLER, Peter, 5656 AE Eindhoven (NL)
(74) Representative: Verweij, Petronella Daniëlle
(86) International application number: PCT/EP2023/077824
(87) International publication number: WO 2024/079016

(56) References cited:
- WO-A1-2011/039688
- WO-A1-2017/182517
- WO-A1-2018/082929
- JP-A- 2002 289 377
- US-A1- 2015 254 570
- US-B1- 10 728 987

## Description

### FIELD OF THE INVENTION

The invention relates to method for controlling an outdoor lighting system for preventing a vehicle burglary of one or more vehicles in a surveillance area. The invention further relates to a controller and computer program product for controlling an outdoor lighting system for preventing a vehicle burglary of one or more vehicles in a surveillance area. The method further relates to a system for preventing a vehicle burglary of one or more vehicles in a surveillance area.

### BACKGROUND

A surge in "smash-and-grab" incidents involving parked vehicles is plaguing many cities. Smash-and-grab incidents are generally "crimes of opportunity". A perpetrator sees an unattended vehicle in an area, with no people around, and they break a window and take whatever valuables were left in the vehicle.

Lighting plays a huge role in creating the desired ambience and feelings of security in a space. Thus, outdoor lighting, such as lighting systems for roadways, streets, parking facilities, parks, landscapes, footpaths, and bicycle paths, can impact car crime rates in residential areas and may be used for the detection and prevention of such car break-ins.

WO 2018/082929 discloses a lighting system for illuminating an environment according to a classification of activity in the environment. WO 2011/039688 discloses setting the intensity of task light sources illuminating an occupied zone to a level higher than the intensity of the remaining task light sources.

### SUMMARY OF THE INVENTION

Interestingly, and contrary to popular belief, increased street lighting may help rather than hinder smash-and-grab incidents. It may be easier for perpetrators to see the interior of a vehicle or assess a vehicle's security, with increased light levels in the street. Perpetrators may more easily be able to see if parked cars contain valuable items when there is a lot of light entering a vehicle's interior from streetlights compared to when there is not. Additionally, it may also be more difficult to remove items from a vehicle, such as hub caps, without adequate lighting.

However, reducing streetlighting levels in the night may raise many safety concerns as citizens fear an increase of the violence, robbery, or residential burglary levels. Increased lighting deters potential offenders by increasing the risk that they will be seen or recognized when committing crimes. According to the Institution of Lighting Professionals, the lack of lighting during the night caused by part-night-lighting in the U.K. has already shown an impact on the elderly and more vulnerable in society- especially on their fear of crime leading to a reluctance to leave their homes at night. Thus, it may not be desired to simply lower the street lighting levels to hinder vehicle crime.

It is therefore an object to provide a method for controlling an outdoor lighting system for preventing a vehicle burglary of one or more (motor) vehicles, e.g., theft from a motor vehicle, in a surveillance area if a suspicious activity, typically preceding a vehicle burglary of one or more vehicles, e.g., a car break-in, is detected. For example, when a person is scouting vehicles in an area.

According to a first aspect, the object is achieved by a method for controlling an outdoor lighting system for preventing vehicle burglary of one or more vehicles in a surveillance area. Said surveillance area comprising a first zone comprising the one or more vehicles and a second zone adjacent to the first zone. As an example, the first zone may comprise one or more parking bays in a parking garage and the second zone may comprise a pedestrian path, adjacent to the first zone, through which a person may walk away from or towards his/her parked vehicle. As a further example, the first zone may comprise a parking lane along a street and the second zone may comprise a sidewalk adjacent to said parking lane. In general, the first zone is where the one or more vehicles can be parked, and the second zone is adjacent to the first zone and provides access to and from the parked vehicle(s) to their rightful occupants as well as to a perpetrator of a vehicle burglary. The second zone may as well provide access to passers-by, not associated with any vehicle. Vehicle burglary comprises theft of a vehicle and/or theft of objects inside (e.g., a purse left behind inside the vehicle, portable screens) or components of said vehicle (e.g., hubcaps, catalytic converters, expensive car radio, speakers, LCD dashboard screens). Said method comprising controlling the outdoor lighting system to illuminate an illumination area, comprising at least part of the first zone and at least part of the second zone, according to a first light setting. The first light setting may be a general light setting which illuminates the one or more vehicles in the first zone and, for example, the pedestrian path or sidewalk in the second zone in a similar manner, for example to meet general lighting regulations.

Said method may comprise receiving data indicative of said first and said second zone. For example, said data may comprise a floor plan designating said first and second zone. Said method further comprising monitoring the surveillance area via one or more sensors. Said method may comprise identifying and recognizing, based on said input from the one or more sensors, the first and the second zones, identifying objects, such as vehicles, and/or persons in the first and/or second zone, and determining, based on said input from the one or more sensors, a presence characteristic of a person in the first zone, said presence characteristic indicative of vehicle burglary scouting. A perpetrator of vehicle burglary will need to determine whether a vehicle is worth burglarizing. For example, whether there are objects of value (e.g., a purse) left inside the vehicle, whether there is a person inside the vehicle, whether there are objects on the vehicle that are of value (e.g., hubcaps, expensive radio, high-end LCD user interface integrated in vehicle's dashboard, etc.) or whether the vehicle is worth stealing. If there are multiple vehicles, a perpetrator may want to pick the vehicle with the most valuable object inside to burglarize. Further, the perpetrator may want to look around to see what happens when (s)he approaches the vehicle, does a bystander notice it, does an alarm go off, etc. The perpetrator will therefore perform vehicle burglary scouting to determine whether or not to burglarize a vehicle. Such presence characteristic may include a duration of presence of a person in the first zone, a distance traveled by a person in the first zone, a number of times a person has entered the first zone within a given time period, the time-series gaze direction of the person, a stress level of a person, or other behaviors or a combination of such behaviors.

Said method further comprising controlling, in response to detecting said presence characteristic, the outdoor lighting system to illuminate the illumination area according to a second light setting, different from the first light setting, wherein in the second light setting the visibility of at least part of the one or more vehicles is reduced.

The inventors have realized that by reducing the visibility of at least part of the one or more vehicles in a surveillance area, can help preventing a vehicle burglary of one or more vehicles in a surveillance area. In that way, a potential perpetrator is not able to clearly assess objects inside the vehicle and/or components of said vehicle (e.g., hubcaps, expensive radio) that are worth burglarizing. Thus, vehicle burglary is prevented.

One or more sensors, such as cameras, Wi-Fi nodes, ultra-wide band (UWB) sensors, occupancy sensors such as PIR sensors, radar sensors, LiDAR sensors, Time-of-Flight sensors, audio sensors, vibration sensors, thermopile sensors, etc., may be used to monitor the surveillance area. The input from the one or more sensors can be used to identify and recognize the first and the second zones and further identify the presence of objects and/o people in said zones. The input from the one or more sensors may further be used to determine a presence characteristic of a person that is indicative of vehicle burglary scouting, e.g., an activity / action that typically precedes a vehicle burglary of one or more vehicles. For example, time-series sensor data from the one or more sensors may be used as input to a machine-learning model (ML) to determine a presence characteristic of a person that is indicative of vehicle burglary scouting. Such ML model may have been trained using labeled instances of presence characteristics indicative of vehicle burglary scouting and corresponding sensor data streams. Additionally, and or alternatively, time-series or frequency analysis may be applied on the time-series sensor data from the one or more sensors to determine a presence characteristic of a person that is indicative of vehicle burglary scouting.

The method comprises controlling the outdoor lighting system to reduce the visibility of at least part of the vehicles in a surveillance area only upon the determination of a characteristic of presence of a person that is indicative of vehicle burglary scouting. In that way, the outdoor lighting system typically illuminates the illumination area, e.g., a roadway, a street, a parking facility, etc., according to a first light setting that is perceived as safe from citizens and only upon the determination of a presence characteristic that is indicative of vehicle burglary scouting, the outdoor lighting system illuminates the illumination area according to the second light setting, wherein in the second light setting the visibility of at least part of the one or more vehicles is reduced. This is beneficial as the outdoor lighting system is controlled in such a way that the illumination area is both considered safe from the citizens, but also, vehicle burglary of the one or more vehicles in the area is prevented by conditionally reducing the visibility of (at least part of the one or more) vehicles.

In the second lighting setting, the outdoor lighting system is controlled such that an illumination level in the first zone in the second lighting setting may be lower than the corresponding illumination level in the first zone in the first lighting setting, such that the visibility of at least part of the one or more vehicles is reduced. This is beneficial as by reducing the illumination level in the first zone, that comprises the one or more vehicles, the visibility of at least part of the vehicles is reduced, thus, potential offenders may not be able to clearly assess the vehicle. For example, assess objects inside the vehicle and/or components of said vehicle that are worth burglarizing. In the second lighting setting, the illumination level in the adjacent second zone may be higher than the first zone such that pedestrians and citizens may feel safe. A well-lit adjacent second zone can also increase recognition of people's faces, their head posture as well as recognition of emotions by computer vision and aid the effectiveness of video surveillance cameras (CCTV), if used.

In the second light setting, the outdoor lighting system may be controlled such that the illumination level in the first zone may further depend on a time of day. For example, upon the detection of a potential offender, the outdoor lighting system may lower the light level emitted in the first zone to a larger extent (such that the first zone has a lower ambient illumination level) during low-pedestrian traffic hours compared to detecting of potential offender during busy pedestrian traffic hours.

The outdoor lighting system may be controlled such that an amount of light entering the interior of the one or more vehicles is reduced, such that the visibility of the interior of the one or more vehicles is reduced. This ensures that the feeling of safety of the pedestrians can be maintained, while the interior of the vehicles is illuminated less than before (thus the interior is less visible) and hence the ability of a potential offender to identify and assess items inside the vehicle can be reduced. For instance, this ensures that there is sufficient bright light not only on the walkway but also on the bushes adjacent to the walkway (low light conditions at the bushes is known to induce fear as an attacker may be able to hide in the bushes without being seen from a long distance).

The outdoor lighting system may be controlled according to the second light setting, such that a vertical illuminance in the first zone is lower than the corresponding vertical illuminance in the first zone in the first light setting, such that the visibility of at least part of the interior of the one or more vehicles is reduced. As most vehicles, such as cars, trucks, etc., have a non-transparent metal roof, the lighting provided by the outdoor lighting system enters the interior of the vehicle through the vehicle's windows. Thus, by adaptively controlling the outdoor lighting system to lower the vertical illuminance in the first zone, this ensures that the amount of light that enters the interior of the vehicle is reduced (thus the interior is less visible). Preferably, the amount of light that lands on the surface of the vehicle (horizontal illuminance) is increased, thus the area around the parked vehicle may be sufficiently lit to provide a feeling of safety for the passer by.

When the outdoor lighting system is controlled according to the second light setting, the beam direction of the outdoor lighting system may be directed towards the second zone such that an amount of light directed towards the first zone is lower than an amount of light directed towards the second zone. This ensures that the illumination levels in the first zone that comprises the one or more vehicles is reduced, while the adjacent second zone remains sufficiently lit.

The method may further comprise determining a location of the person in the first zone and wherein the second lighting setting comprises illuminating a coverage area surrounding the person location with a first illumination level and illuminating the environment outside the coverage area according to a second illumination level, said second illumination level being higher than the first illumination level. By selectively controlling the outdoor lighting system to lower the illumination level in the coverage area surrounding the potential offender, the visibility of at least part of the one or more vehicles in the proximity of the location of the person is reduced. By administering higher illumination level outside the coverage area, the person may still maintain a feeling of safety despite the illumination levels in his/her very direct vicinity being dimmed.

The method may further comprise determining that a duration of presence of the person in the first zone may be above a time threshold based on the input from the one or more sensors and said presence characteristic comprises said duration of presence. If the person spends a substantial amount of time, a duration above a (predetermined) time threshold, in the first zone, this can be an indication that the person is scouting / checking inside the one or more vehicles (an activity typically preceding a vehicle burglary of the one or more vehicles). Thus, the duration of presence in the first zone can be considered as a presence characteristic indicative of vehicle burglary scouting in the surveillance area.

The method may further comprise determining that a distance traveled by the person in the first zone is above a distance threshold based on the input from the one or more sensors and said presence characteristic comprises said traveled distance. A person scouting (checking inside) more than one vehicle in the first zone may travel a substantial distance (above a predetermined distance threshold) within the first zone. For example, a person moving from one vehicle to another. Thus, the distance traveled by a person in the first zone can be considered as a presence characteristic indicative of vehicle burglary scouting of one or more vehicles in the surveillance area.

The method may further comprise determining that a number of times the person entered the first zone is above a threshold based on the input from the one or more sensors and said presence characteristic comprises said number of times the person entered the first zone within a predetermined time period. If the person has entered (and exited respectively) the first zone a substantial number of times (above a predetermined threshold), this may be a further indication that the person is scouting (checking) the one or more vehicles in the first zone. For example, a person moving from (and checking inside) one vehicle to another, may cross between the first and the second zone multiple times. Thus, the number of times the person entered the first zone can be considered as a presence characteristic indicative of vehicle burglary scouting. The duration of presence may be determined based on the person's behavior over the last few minutes. Alternatively, the surveillance system may recognize that a person is returning to the zone, for instance after 10 minutes, an hour or a day; the duration of presence may hence also take past visits to the zone into account.

The method may further comprise determining that a duration of gaze of the person in the first zone directed towards each of the one or more vehicles is above a threshold based on the input from the one or more sensors and said presence characteristic may comprise said duration of gaze. If the person in the first zone has been looking towards a parked vehicle longer than a predetermined time threshold, e.g., longer than 20 seconds, or has been looking towards a plurality of parked vehicles, each for more than a predetermined time threshold, this may be an indication that the person is scouting (checking) the one or more vehicles in the first zone. Thus, the gaze duration of the person directed towards each of the one or more vehicles can be considered as a presence characteristic indicative of vehicle burglary scouting.

The method may further comprise determining that a stress level of the person in the first zone is above a stress threshold based on the input from the one or more sensors and said presence characteristic may comprise said stress level. If the person in the first zone is experiencing high stress levels, inferred by for example a higher breathing and/or heart rate, etc., this may be an indication that the person is performing vehicle burglary scouting. Thus, the stress level of the person can be considered as a presence characteristic indicative of vehicle burglary scouting.

The method may further comprise determining two or more presence characteristics, such as the duration of presence of the person in the first zone, the distance traveled by the person in the first zone, the number of times the person entered the first zone, a stress level of the person, etc., analyzing said presence characteristics and determining said vehicle burglary scouting based on said analysis. For example, a rule-based algorithm may be applied on the presence characteristics to determine actions (activities) preceding a vehicle burglary of the one or more vehicles (vehicle burglary scouting). Additionally, and or alternatively, a machine-learning model (ML) may be applied on the presence characteristics to determine actions (activities) preceding a vehicle burglary of the one or more vehicles. Such ML-model may have been trained using labeled instances of vehicle burglary scouting and corresponding presence characteristics. Additionally, and or alternatively, a probabilistic machine-learning model may be applied on the presence characteristics to determine a probability score for vehicle burglary scouting (e.g., 80% probability of a person scouting for a car-break-in). Additionally, and or alternatively, a further probabilistic ML-model may be trained to output a probability score for further actions indicative of further activities in the surveillance area (e.g., 20% probability that this person is waiting for a bus). The output probability scores may impact the second lighting setting, for example, the degree of illuminance reduction in the first zone may depend on (e.g., be analogous to) the probability score that a person is scouting for a car-break-in.

According to a second aspect, the object is achieved by a controller for controlling an outdoor lighting system for preventing a vehicle burglary of one or more vehicles in a surveillance area, said surveillance area comprising a first zone comprising the one or more vehicles and a second zone adjacent to the first zone, said controller configured to:
- control the outdoor lighting system to illuminate an illumination area, comprising at least part of the first zone and at least part of the second zone, according to a first light setting;
- receive input from one or more sensors monitoring the surveillance area;
- determine, based on the input from the one or more sensors, a characteristic of presence of a person in the first zone, said presence characteristic indicative of vehicle burglary scouting;
- control, in response to determining said presence characteristic, the outdoor lighting system to illuminate the illumination area according to a second light setting, different from the first light setting, wherein in the second light setting the visibility of at least part of the one or more vehicles is reduced.

According to a third aspect, the object is achieved by a system for preventing a vehicle burglary of one or more vehicles in a surveillance area, said surveillance area comprising a first zone comprising the one or more vehicles and a second zone adjacent to the first zone, said system comprising:
- the outdoor lighting system described herein;
- one or more sensors monitoring the surveillance area;
- a controller as described herein.

According to a fourth aspect, the object is achieved by a computer program product for a computing device, the computer program product comprising computer program code to perform the method when the computer program product is run on a processing unit of the computing device.

It should be understood that the system, method and computer program product may have similar and/or identical embodiments and advantages as the above-mentioned lighting devices.

### BRIEF DESCRIPTION OF THE DRAWINGS

The above, as well as additional objects, features and advantages of the disclosed systems, devices and methods will be better understood through the following illustrative and non-limiting detailed description of embodiments of devices and methods, with reference to the appended drawings, in which:
Fig. 1 shows schematically an example of a system for preventing a vehicle burglary of one or more vehicles; and
Fig. 2 shows schematically a method of controlling an outdoor lighting system for preventing a vehicle burglary of one or more vehicles.

All the figures are schematic, not necessarily to scale, and generally only show parts which are necessary in order to elucidate the invention, wherein other parts may be omitted or merely suggested.

### DETAILED DESCRIPTION

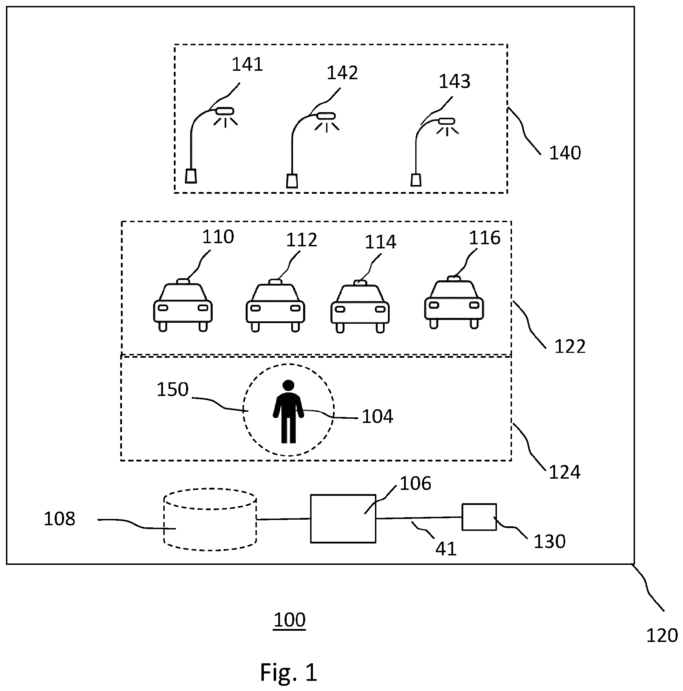

Fig. 1 shows an example of system 100 for preventing a vehicle burglary of one or more vehicles 110-116, such as cars, trucks, etc., in a surveillance area 120. The surveillance area 120 may be a roadway, a street, an indoor / outdoor parking facility, a park, etc. The surveillance area 120 comprises a first zone 122 comprising the one or more vehicles 110-116, e.g., a dedicated parking zone on the side of a street, a dedicated parking zone in an indoor parking space, and a second zone 124 adjacent to the first zone, e.g., a street, a pathway in a garage. The system 100 comprises an outdoor lighting system 140, comprising one or more outdoor lighting fixtures such as lighting poles 141-143 to illuminate an illumination area, comprising at least part of the first zone 122 and at least part of the second zone 124. The lighting fixtures 141-143 may be configured for illuminating the illumination area using lamp technologies such as high intensity discharge (HID), LED, OLED, bioluminescent light sources, laser lighting, fluorescent, etc.

The system 100 further comprises one or more sensors 130 monitoring the surveillance area 120. The one or more sensors 130 may be occupancy or motion sensors such as passive infrared, ultrasonic, time of flight sensors, radar sensors, thermopile sensors, Wi-Fi sensor nodes, or even more advanced sensors such as cameras. The one or more sensors 130 may be stand-alone sensors or be co-located with the outdoor lighting system 140. For example, outdoor one or more lighting fixtures 141-143 may include a camera sensor 130 for capturing video and audio information (e.g., pictures, video streams, video recordings).

The system 100 further comprises at least one data processor or controller 106. The controller 106 may be in connection and communication with the one or more sensors 130 via a wireless connection, via e.g., a radiofrequency or an optical communication link. For example, Wi-Fi, ZigBee, BLE, Lo-Ra, UWB, VLC, IR, Li-Fi, cellular communication, low orbit satellite communication etc., connection. Said connection may alternatively be wired and powerline communication.

The one or more sensors 130 may comprise a transmitter (not depicted) for transmitting the respective signal 41 to the controller 106 via the wired or wireless connection. The controller 106 may comprise a receiver (not depicted) for receiving each respective signal 41 from the respective one or more sensors 130.

The controller 106 is configured to control the outdoor lighting system 140 to illuminate the illumination area, comprising at least part of the first zone 122 and at least part of the second zone 124, according to a first light setting. The first light setting may be predefined based on general lighting regulations and guidelines for street lighting applications, parking lot lighting applications, etc.

The controller 106 is configured to determine, based on input from the one or more sensors 130, a presence characteristic of a person 104 in the first zone 122, said presence characteristic being indicative of vehicle burglary scouting. For example, the controller 106, may be configured to first, based on input from the one or more sensors 130, identify and recognize the first and second zones and identify objects and/or people in said first and second zones. Several methods and techniques are available in the state of art for the purpose of identifying zones in an area, for example the surveillance area 120, and detecting objects in said zones. For example, image segmentation techniques may be used to identify zones in an area by grouping pixels with similar characteristics together. In another example, color or texture-based segmentation techniques may be used to distinguish different zones in the surveillance area 120. Object detection algorithms, such as Haar cascades, deep learning based approaches, such as You Only Look Once (YOLO) or Single Shot MultiBox Detector (SSD) methods, may be used to detect vehicles and/or people in image or video frames. These algorithms may be trained on large datasets, for example annotating parking lot images, to learn the features of vehicles, etc. The controller 106 may be configured to determine the presence characteristic by directly applying a machine-learning model, such as a support vector machine model (SVM), neural network model, logistic regression model, a graph neural network, an autoencoder, etc., on the received time series signals 41 from the one or more sensors 130. The trained machine learning model may make such a determination because the machine learning model may have already been trained with inputs that may include instances or segments (time series data) of signals 41 received from one or more sensors 130 monitoring the surveillance area 120 and output corresponding labeled instances of such presence characteristics. In a further example, the controller 106 may be configured to determine the presence characteristic by applying time-series, or frequency-domain-based data analysis on the received time series signals 41 from the one or more sensors 130.

Alternatively, said one or more sensors 130 may have processing capabilities and said presence characteristic determination may be (at least partially) performed at the one or more sensors 130. For example, a camera sensor with processing capabilities may process video stream data from the surveillance area 120 to determine the presence of the person 104 in the first zone 122 and optionally determine one or more presence characteristics of the person 104 indicative of vehicle burglary scouting. In such case, the controller 106 receives as input from the one or more sensors 130, the one or more presence characteristics.

The presence characteristic may comprise a duration of presence of the person 104 in the first zone 122. The controller 106 may be configured to determine if the duration of presence of the person 104 in the first zone 122 is above a time threshold. Said time threshold may be predetermined based on expert knowledge, may be adaptively adjusted based on, for example the time of the day, day of the week, etc., or may be adaptively adjusted based on adaptive feedback, etc. For example, if it takes no more than 30 seconds of presence of a person in the first zone to enter his/her car or actuate one of the (rear) doors of the car, then a time threshold may be set that is close to or well above 30 seconds. The time threshold may also be adjusted based on the location type. For instance, near a parking meter (where people are waiting for paying a parking ticket), a different time threshold may be applied than near an ATM machine, as the typical dwell time and human behavior associated with each of these locations is different. A self-learning sensor system may be used to automatically identify (e.g., over a learning-in period) the location type, e.g., residential street, near a parking meter, near an ATM, etc. Subsequently, the time threshold may be adjusted based on the identified location type. For instance, for a parking meter, the time threshold may be increased.

The presence characteristic may comprise a distance traveled by the person 104 in the first zone 122. The controller 106 may be configured to determine if the distance traveled by the person 104 in the first zone 122 is above a distance threshold. Said distance threshold may be predetermined based on expert knowledge, may be adaptively adjusted based on, for example the time of the day, day of the week, etc., or may be adaptively adjusted based on adaptive feedback (e.g., adaptive learning of parameters of the system), etc. For example, if the maximum distance required for a person to travel from the moment (s)he enters the first zone 122 until (s)he enters his/her car is approximately 100m, then a distance threshold may be set that is close to or well above 100m. Said distance threshold may be adjusted for the particular zone by, for example, by averaging the measured distance (which may depend on the size of the first zone 122) required for people to travel from the moment they enter the first zone 122 until they enter their vehicles.

The presence characteristic may comprise a number of times the person 104 entered (and exited respectively) the first zone 122. The controller 106 may be configured to determine if the number of times the person the person 104 entered the first zone 122 is above a (predetermined) threshold. Said threshold may be predetermined based on expert knowledge, may be adaptively adjusted based on, for example the time of the day, day of the week, etc., or may be adaptively adjusted based on adaptive feedback (e.g., adaptive learning of parameters of the system), etc. For example, a person wanting to enter his/her vehicle, typically walks in the adjusted zone 124, for example the pedestrian area, and enters the first zone 122 (one time) only to move towards his/her vehicle. A person exiting his/her vehicle follows the opposite path. Thus, a person entering / exiting multiple times the first zone 122 may be an indication that said person is scouting / checking for multiple vehicles in the first zone 122. Note that a person may enter more than one times the first zone 122 without the intention to perform a vehicle burglary, for example because (s)he has forgotten the exact location of his/her vehicle, (s)he may return to the parked vehicle to retrieve an object, etc. Said threshold may be adjusted depending on the time of the day or day of the week. For example, it may require more effort for a person to find his/her car during busy time periods / days where multiple vehicles are present in the first zone 122, thus, said threshold may be accordingly adjusted.

The presence characteristic may comprise a duration that the gaze of the person 104 in the first zone 122 is directed towards each of the one or more vehicles 110-116. Several methods and techniques for sensor-based gaze direction determination are known in the field. For example, by analyzing the head posture of the person 104 (by monitoring the neck of the person, etc.). The controller 106 may be configured to determine if the time duration that the person 104 is gazing towards each of the one or more vehicles 110-116 is above a threshold. Said threshold may be predetermined based on expert knowledge, may be adaptively adjusted based on, for example the time of the day, day of the week, etc., or may be adaptively adjusted based on adaptive feedback (e.g., adaptive learning of parameters of the system), etc. For example, it may be typical that a person 104 is gazing towards his/her car before entering the car, yet this may not last longer than, say 20 seconds, then a duration threshold may be set that is close or well above 20 seconds.

The controller 106 may further be configured to determine a stress level of the person 104 based on the input from the one or more sensors 130. Several methods and techniques for sensor-based detecting of the stress level from a distance are known in the field and may be used to determine the stress level of the person 104 moving in the surveillance area 120. For instance, a Frequency-Modulated Continuous Wave (FMCW) radar sensor or Wi-Fi sensing may be used to determine from a distance a breathing rate and/or a heart rate of a person, from which the current stress level of the person can be inferred. Video-based stress detection through deep learning is also well known in the art. A would-be burglar will experience high stress levels when scouting for burglaries. Thus, a stress level of the person 104 may be a presence characteristic indicative of vehicle burglary scouting.

The controller 106 may further be configured to determine one or more presence characteristics, analyze said presence characteristics and determine based on the analysis of the one or more presence characteristics an action / activity preceding a vehicle burglary of the one or more vehicles 110-116, such as vehicle burglary scouting. For example, the controller 106 may be configured to determine a vehicle burglary scouting, by applying a rule-based algorithm or a machine-learning model, such as SVM, neural network model, logistic regression model, etc., on the one or more presence characteristics. The trained machine learning model may make such a determination because the machine learning model may have already been trained with inputs that may include instances of presence characteristics and output corresponding actions labeled as vehicle burglary scouting. Additionally, and or alternatively, the controller 106 may be configured to determine a probability of vehicle burglary scouting, by applying a probabilistic machine-learning model, such as a probabilistic neural network model, a Bayesian model, etc., on the one or more presence characteristics.

The controller 106 may be configured to, in response to detecting a presence characteristic indicative of vehicle burglary scouting of the one or more vehicles 110-116, control the outdoor lighting system 140 to illuminate the illumination area according to a second light setting, different from the first light setting, in which the visibility of at least part of the one or more vehicles 110-116 is reduced.

For example, the controller 106 may be configured to set, in the second lighting setting, the illumination level in the first zone 122 comprising the one or more vehicles 110-116 at a lower level compared to the first lighting setting. In that way, the visibility of at least part of the one or more vehicles 110-116 is reduced, while the visibility in the adjacent second zone 124 (comprising for example the corridor in a parking garage, pavement in a street, etc.) remains at a comfortable enough light level for citizens. The level at which the illumination in the first zone 122 is set may depend on the time of day. For example, upon the detection of potential offender, the light level in the first zone may be lowered to a larger extent (at a lower illumination level) during low-pedestrian traffic hours compared to detecting of potential offender during busy pedestrian traffic hours. The light level may also be dependent on the age of the person. If the system 100 infers an old age of the person, the light level is increased as elder people require higher light levels due to weaker eyesight and higher risk of falling and higher risk of being robbed.

The controller 106 may be configured to set the illumination level in the second light setting in the first zone 122 such that a vertical illuminance in the first zone 122 is lower than the corresponding vertical illuminance in the first zone 122 in the first light setting. Techniques and design tools to independently control vertical (the amount of light landing on a vertical surface, such as the amount of light entering the interior of a car through the windows) and horizontal (the amount of light landing on a horizontal surface such as the top of a car) illuminance of a space are well known in the field of retail lighting and hospitality and will not be further discussed in the context of this application.

The controller 106 may be configured to steer the beam direction of the one or more lighting fixtures 141-143 of the outdoor lighting system 140 towards the second zone 124, such that an amount of light directed towards the first zone 122 is lower than an amount of light directed towards the second zone 124. For example, by using direction turning films installed inside or above the one or more lighting fixtures 141-143 which allow to redirect and decrease or increase the beam angle of a light source.

The controller 106 may further be configured to determine a location of the person 104 based on the input from the one or more sensors 130. Several methods and techniques for sensor-based detecting, locating, and tracking people in a dynamic environment are known in the field and may be used to determine and track the location of the person 104 moving in the surveillance area 120. The controller 106 may further be configured to illuminate a coverage area 150 surrounding the person location with a first illumination level and illuminating the environment outside the coverage area 150 according to a second illumination level. The second illumination level may be higher than the first illumination level.

The system 100 may further comprise at least one data repository or storage or memory for storing computer program code instructions. Yet alternatively, the system 100 may comprise a server. The one or more sensors 130 may convey their respective signal 41 to the server, such that the server may obtain each respective signal 41. The controller 106 may then be configured to retrieve (receive) the respective signal 41 from the server. The controller 206 may be communicatively coupled to the cloud.

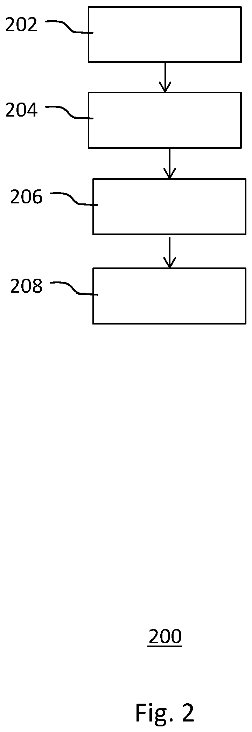

Fig. 2 shows a method 200 of controlling an outdoor lighting system 140 for preventing a vehicle burglary of one or more vehicles 110-116 in a surveillance area 120. The method 200 may comprise the steps of
- controlling 202, by a controller 106, the outdoor lighting system 140 to illuminate an illumination area, comprising at least part of the first zone 122 and at least part of the second zone 124, according to a first light setting;
- monitoring 204 the surveillance area via one or more sensors 130;
- determining 206 by the controller 106, based on input from the one or more sensors 130, a presence characteristic of a person 104 in the first zone 122, said presence characteristic indicative of said vehicle burglary scouting;
- controlling 208 by the controller 106, in response to detecting said presence characteristic, the outdoor lighting system 140 to illuminate the illumination area according to a second light setting, different from the first light setting, wherein in the second light setting the visibility of the interior of the one or more vehicles 110-116 is reduced.

The method 200 may be executed by computer program code of a computer program product when the computer program product is run on a processing unit of a computing device, such as the controller 106.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method for controlling an outdoor lighting system (140) for preventing vehicle burglary of one or more vehicles (110-116) in a surveillance area, said surveillance area comprising a first zone (122) comprising the one or more vehicles and a second zone (124) adjacent to the first zone, said method comprising the steps of:
- controlling (202) the outdoor lighting system to illuminate an illumination area, comprising at least part of the first zone and at least part of the second zone, according to a first light setting;
- monitoring (204) the surveillance area via one or more sensors (130);
- determining (206), based on input from the one or more sensors, a presence characteristic of a person (104) in the first zone, said presence characteristic indicative of vehicle burglary scouting;
- controlling (208), in response to detecting said presence characteristic, the outdoor lighting system to illuminate the illumination area according to a second light setting, different from the first light setting, **characterised in that** in the second light setting:
- the visibility of at least part of the one or more vehicles is reduced, and
- an illumination level in the second zone is higher than an illumination level in the first zone.

2. The method according to claim 1, wherein in the second lighting setting, the outdoor lighting system (140) is controlled such that an amount of light entering the interior of the one or more vehicles (110-116) is reduced, such that the visibility of the interior of the one or more vehicles is reduced.

3. The method according to any preceding claim, wherein the outdoor lighting system (140) is controlled such that an illumination level of the first zone (122) in the second lighting setting is lower than the illumination level in the first zone in the first lighting setting, such that the visibility of at least part of the one or more vehicles (110-116) is reduced.

4. The method according to any preceding claim, wherein in the second light setting, the outdoor lighting system (140) is controlled such that the illumination level in the first zone (122) depends on a time of day.

5. The method according to claim 2, wherein the outdoor lighting system (140) is controlled such that in the second light, setting vertical illuminance in the first zone (122) is lower than in the first lighting setting, thereby reducing the visibility of at least part of an interior of the one or more vehicles (110-116).

6. The method according to any preceding claim, wherein the method further comprises determining a location of the person (104) in the first zone (122) and wherein the second lighting setting comprises illuminating a coverage area (150) surrounding the person location with a first illumination level and illuminating the environment outside the coverage area according to a second illumination level, said second illumination level being higher than the first illumination level.

7. The method according to any preceding claim, wherein the method comprises determining that a duration of presence of the person (104) in the first zone (122) is above a time threshold based on the input from the one or more sensors (130), and wherein said presence characteristic comprises said duration of presence.

8. The method according to any preceding claim, wherein the method comprises determining that a distance traveled by the person (104) in the first zone (122) is above a distance threshold based on the input from the one or more sensors (130), and wherein said presence characteristic comprises said traveled distance.

9. The method according to any preceding claim, wherein the method comprises determining that a number of times the person (104) entered the first zone is above a threshold based on the input from the one or more sensors (130), and wherein said presence characteristic comprises said number of times the person entered the first zone within a predetermined time period.

10. The method according to any preceding claim, wherein the method comprises determining that a duration of gaze of the person (104) in the first zone (122) directed towards each of the one or more vehicles (110-116) is above a threshold based on the input from the one or more sensors (130), and wherein said presence characteristic comprises said duration of gaze.

11. The method according to any preceding claim, wherein the method comprises determining that a stress level of the person (104) in the first zone (122) is above a stress threshold based on the input from the one or more sensors (130), and wherein said presence characteristic comprises said stress level.

12. The method according to any preceding claim, wherein the method further comprises determining two or more presence characteristics according to claims 7-11, analyzing said presence characteristics and determining said vehicle burglary scouting based on said analysis.

13. A controller (106) for controlling an outdoor lighting system (140) for preventing a vehicle burglary of one or more vehicles (110-116) in a surveillance area, said surveillance area comprising a first zone (122) comprising the one or more vehicles and a second zone (124) adjacent to the first zone, said controller configured to:
- control the outdoor lighting system to illuminate an illumination area, comprising at least part of the first zone and at least part of the second zone, according to a first light setting;
- receive input from one or more sensors (130) monitoring the surveillance area;
- determine, based on the input from the one or more sensors, a characteristic of presence of a person in the first zone, said presence characteristic indicative of vehicle burglary scouting;
- control, in response to determining said presence characteristic, the outdoor lighting system to illuminate the illumination area according to a second light setting, different from the first light setting, **characterized in that** in the second light setting:
- the visibility of at least part of the one or more vehicles is reduced, and
- an illumination level in the second zone is higher than an illumination level in the first zone.

14. A system for preventing vehicle burglary of one or more vehicles in a surveillance area, said surveillance area comprising a first zone comprising the one or more vehicles and a second zone adjacent to the first zone, said system comprising:
- an outdoor lighting system (140);
- one or more sensors monitoring the surveillance area;
- the controller (106) according to claim 13.

15. A computer program product for a computing device, the computer program product comprising computer program code to perform the method of any of the claims 1-11 when the computer program product is run on the system of claim 14.

## Patentansprüche

1. Verfahren zum Steuern eines Außenbeleuchtungssystems (140) zur Verhinderung eines Fahrzeugeinbruchs in ein oder mehrere Fahrzeug(e) (110 bis 116) in einem Überwachungsbereich, wobei der Überwachungsbereich eine erste Zone (122), die das eine oder die mehreren Fahrzeug(e) umfasst, und eine zweite Zone (124), die an die erste Zone angrenzt, umfasst, das Verfahren umfassend die Schritte:
- Steuern (202) des Außenbeleuchtungssystems zum Beleuchten eines Beleuchtungsbereichs, der mindestens einen Teil der ersten Zone und mindestens einen Teil der zweiten Zone umfasst, gemäß einer ersten Lichteinstellung;
- Überwachen (204) des Überwachungsbereichs über einen oder mehrere Sensor(en) (130);
- Bestimmen (206), basierend auf einer Eingabe von dem einen oder den mehreren Sensor(en), einer Anwesenheitscharakteristik einer Person (104) in der ersten Zone, wobei die Anwesenheitscharakteristik auf Fahrzeugeinbruchsausspähung hinweist;
- Steuern (208), als Reaktion auf das Erkennen der Anwesenheitscharakteristik, des Außenbeleuchtungssystems zum Beleuchten des Beleuchtungsbereichs gemäß einer zweiten Lichteinstellung, die sich von der ersten Lichteinstellung unterscheidet, **dadurch gekennzeichnet, dass** in der zweiten Lichteinstellung:
- die Sichtbarkeit von mindestens einem Teil des einen Fahrzeugs oder der mehreren Fahrzeuge reduziert ist und
- ein Beleuchtungsniveau in der zweiten Zone höher ist als ein Beleuchtungsniveau in der ersten Zone.

2. Verfahren nach Anspruch 1, wobei das Außenbeleuchtungssystem (140) in der zweiten Beleuchtungseinstellung derart gesteuert wird, dass eine Lichtmenge, die in den Innenraum des einen Fahrzeugs oder der mehreren Fahrzeuge (110 bis 116) eintritt, reduziert wird, so dass die Sichtbarkeit des Innenraums des einen Fahrzeugs oder der mehreren Fahrzeuge reduziert wird.

3. Verfahren nach einem der vorstehenden Ansprüche, wobei das Außenbeleuchtungssystem (140) derart gesteuert wird, dass ein Beleuchtungsniveau der ersten Zone (122) in der zweiten Beleuchtungseinstellung niedriger ist als das Beleuchtungsniveau in der ersten Zone in der ersten Beleuchtungseinstellung, so dass die Sichtbarkeit von mindestens einem Teil des einen Fahrzeugs oder der mehreren Fahrzeuge (110 bis 116) reduziert wird.

4. Verfahren nach einem der vorstehenden Ansprüche, wobei
das Außenbeleuchtungssystem (140) in der zweiten Lichteinstellung derart gesteuert wird, dass das Beleuchtungsniveau in der ersten Zone (122) von einer Tageszeit abhängt.

5. Verfahren nach Anspruch 2, wobei das Außenbeleuchtungssystem (140) derart gesteuert wird, dass die vertikale Beleuchtungsstärke in der ersten Zone (122) in der zweiten Lichteinstellung niedriger ist als in der ersten Beleuchtungseinstellung, wodurch die Sichtbarkeit von mindestens einem Teil eines Innenraums des einen Fahrzeugs oder der mehreren Fahrzeuge (110 bis 116) reduziert wird.

6. Verfahren nach einem der vorstehenden Ansprüche, wobei das Verfahren ferner das Bestimmen eines Ortes der Person (104) in der ersten Zone (122) umfasst und wobei die zweite Beleuchtungseinstellung das Beleuchten eines Abdeckungsbereichs (150), der den Ort der Person umgibt, mit einem ersten Beleuchtungsniveau und das Beleuchten der Umgebung außerhalb des Abdeckungsbereichs gemäß einem zweiten Beleuchtungsniveau umfasst, wobei das zweite Beleuchtungsniveau höher ist als das erste Beleuchtungsniveau.

7. Verfahren nach einem der vorstehenden Ansprüche, wobei das Verfahren das Bestimmen basierend auf der Eingabe von dem einen oder den mehreren Sensor(en) (130) umfasst, dass eine Anwesenheitsdauer der Person (104) in der ersten Zone (122) über einem Zeitschwellenwert liegt, und wobei die Anwesenheitscharakteristik die Anwesenheitsdauer umfasst.

8. Verfahren nach einem der vorstehenden Ansprüche, wobei das Verfahren das Bestimmen basierend auf der Eingabe von dem einen oder den mehreren Sensor(en) (130) umfasst, dass eine durch die Person (104) in der ersten Zone (122) zurückgelegte Strecke über einem Streckenschwellenwert liegt, und wobei die Anwesenheitscharakteristik die zurückgelegte Strecke umfasst.

9. Verfahren nach einem der vorstehenden Ansprüche, wobei das Verfahren das Bestimmen basierend auf der Eingabe von dem einen oder den mehreren Sensor(en) (130) umfasst, dass eine Anzahl von Malen, die die Person (104) die erste Zone betreten hat, über einem Schwellenwert liegt, und wobei die Anwesenheitscharakteristik die Anzahl von Malen, die die Person die erste Zone innerhalb einer vorbestimmten Zeitspanne betreten hat, umfasst.

10. Verfahren nach einem der vorstehenden Ansprüche, wobei das Verfahren das Bestimmen basierend auf der Eingabe von dem einen oder den mehreren Sensor(en) (130) umfasst, dass eine Dauer des Blicks der Person (104) in der ersten Zone (122), der auf jedes des einen Fahrzeugs oder der mehreren Fahrzeuge (110 bis 116) gerichtet ist, über einem Schwellenwert liegt, und wobei die Anwesenheitscharakteristik die Dauer des Blicks umfasst.

11. Verfahren nach einem der vorstehenden Ansprüche, wobei das Verfahren das Bestimmen basierend auf der Eingabe von dem einen oder den mehreren Sensor(en) (130) umfasst, dass ein Stressniveau der Person (104) in der ersten Zone (122) über einer Stressschwelle liegt, und wobei die Anwesenheitscharakteristik das Stressniveau umfasst.

12. Verfahren nach einem der vorstehenden Ansprüche, wobei das Verfahren ferner das Bestimmen von zwei oder mehreren Anwesenheitscharakteristika gemäß Ansprüchen 7 bis 11, das Analysieren der Anwesenheitscharakteristika und das Bestimmen der Fahrzeugeinbruchsausspähung basierend auf der Analyse umfasst.

13. Steuereinheit (106) zum Steuern eines Außenbeleuchtungssystems (140) zur Verhinderung eines Fahrzeugeinbruchs in ein oder mehrere Fahrzeug(e) (110 bis 116) in einem Überwachungsbereich, wobei der Überwachungsbereich eine erste Zone (122), die das eine oder die mehreren Fahrzeug(e) umfasst, und eine zweite Zone (124), die an die erste Zone angrenzt, umfasst, wobei die Steuereinheit konfiguriert ist zum:
- Steuern des Außenbeleuchtungssystems zum Beleuchten eines Beleuchtungsbereichs, der mindestens einen Teil der ersten Zone und mindestens einen Teil der zweiten Zone umfasst, gemäß einer ersten Lichteinstellung;
- Empfangen einer Eingabe von einem oder mehreren Sensor(en) (130), die den Überwachungsbereich überwacht/überwachen;
- Bestimmen, basierend auf der Eingabe von dem einen oder den mehreren Sensor(en), einer Anwesenheitscharakteristik einer Person in der ersten Zone, wobei die Anwesenheitscharakteristik auf Fahrzeugeinbruchsausspähung hinweist;
- Steuern, als Reaktion auf das Bestimmen der Anwesenheitscharakteristik, des Außenbeleuchtungssystems zum Beleuchten des Beleuchtungsbereichs gemäß einer zweiten Lichteinstellung, die sich von der ersten Lichteinstellung unterscheidet, **dadurch gekennzeichnet, dass** in der zweiten Lichteinstellung:
- die Sichtbarkeit von mindestens einem Teil des einen Fahrzeugs oder der mehreren Fahrzeuge reduziert ist und
- ein Beleuchtungsniveau in der zweiten Zone höher ist als ein Beleuchtungsniveau in der ersten Zone.

14. System zur Verhinderung eines Fahrzeugeinbruchs in ein oder mehrere Fahrzeug(e) in einem Überwachungsbereich, wobei der Überwachungsbereich eine erste Zone, die das eine oder die mehreren Fahrzeug(e) umfasst, und eine zweite Zone, die an die erste Zone angrenzt, umfasst, das System umfassend:
- ein Außenbeleuchtungssystem (140);
- einen oder mehrere Sensor(en), der/die den Überwachungsbereich überwacht/überwachen;
- die Steuereinheit (106) nach Anspruch 13.

15. Computerprogrammprodukt für eine Rechenvorrichtung, das Computerprogrammprodukt umfassend Computerprogrammcode, um das Verfahren nach einem der Ansprüche 1 bis 11 durchzuführen, wenn das Computerprogrammprodukt auf dem System nach Anspruch 14 ausgeführt wird.

## Revendications

1. Procédé permettant de commander un système d'éclairage extérieur (140) pour prévenir le cambriolage de véhicules d'un ou des véhicules (110-116) dans une zone de surveillance, ladite zone de surveillance comprenant une première zone (122) comprenant le ou les véhicules et une seconde zone (124) adjacente à la première zone, ledit procédé comprenant les étapes consistant à :
- commander (202) le système d'éclairage extérieur pour éclairer une zone d'éclairement, comprenant au moins une partie de la première zone et au moins une partie de la seconde zone, conformément à un premier réglage d'éclairage ;
- surveiller (204) la zone de surveillance par l'intermédiaire d'un ou des capteurs (130) ;
- déterminer (206), sur la base de données provenant du ou des capteurs, une caractéristique de présence d'une personne (104) dans la première zone, ladite caractéristique de présence indiquant un repérage de cambriolage de véhicules ;
- commander (208), en réponse à la détection de ladite caractéristique de présence, le système d'éclairage extérieur pour éclairer la zone d'éclairement conformément à un second réglage d'éclairage, différent du premier réglage d'éclairage, **caractérisé en ce que** dans le second réglage d'éclairage :
- la visibilité d'au moins une partie du ou des véhicules est réduite, et
- un niveau d'éclairement dans la seconde zone est supérieur à un niveau d'éclairement dans la première zone.

2. Procédé selon la revendication 1, dans lequel, dans le second réglage d'éclairage, le système d'éclairage extérieur (140) est commandé de manière qu'une quantité de lumière entrant dans l'intérieur du ou des véhicules (110-116) soit réduite, de manière que la visibilité de l'intérieur du ou des véhicules soit réduite.

3. Procédé selon l'une quelconque revendication précédente, dans lequel le système d'éclairage extérieur (140) est commandé de manière qu'un niveau d'éclairement de la première zone (122) dans le second réglage d'éclairage soit inférieur au niveau d'éclairement dans la première zone dans le premier réglage d'éclairage, de manière que la visibilité d'au moins une partie du ou des véhicules (110 à 116) soit réduite.

4. Procédé selon l'une quelconque revendication précédente, dans lequel dans le second réglage
d'éclairage, le système d'éclairage extérieur (140) est commandé de manière que le niveau d'éclairement dans la première zone (122) dépende d'une heure de la journée.

5. Procédé selon la revendication 2, dans lequel le système d'éclairage extérieur (140) est commandé de manière que, dans le second réglage d'éclairage, l'éclairement vertical dans la première zone (122) soit plus faible que dans le premier réglage d'éclairage, réduisant ainsi la visibilité d'au moins une partie de l'intérieur du ou des véhicules (110 à 116).

6. Procédé selon l'une quelconque revendication précédente, dans lequel le procédé comprend en outre la détermination d'une position de la personne (104) dans la première zone (122) et dans lequel le second réglage d'éclairage comprend l'éclairement d'une zone de couverture (150) entourant la position de la personne avec un premier niveau d'éclairement et l'éclairement de l'environnement à l'extérieur de la zone de couverture conformément à un second niveau d'éclairement, ledit second niveau d'éclairement étant supérieur au premier niveau d'éclairement.

7. Procédé selon l'une quelconque revendication précédente, dans lequel le procédé comprend la détermination du fait qu'une durée de présence de la personne (104) dans la première zone (122) est supérieure à un seuil de temps sur la base des données provenant du ou des capteurs (130), et dans lequel ladite caractéristique de présence comprend ladite durée de présence.

8. Procédé selon l'une quelconque revendication précédente, dans lequel le procédé comprend la détermination du fait qu'une distance parcourue par la personne (104) dans la première zone (122) est supérieure à un seuil de distance sur la base des données provenant du ou des capteurs (130), et dans lequel ladite caractéristique de présence comprend ladite distance parcourue.

9. Procédé selon l'une quelconque revendication précédente, dans lequel le procédé comprend la détermination du fait qu'un nombre de fois où la personne (104) est entrée dans la première zone est supérieur à un seuil sur la base des données provenant du ou des capteurs (130), et dans lequel ladite caractéristique de présence comprend ledit nombre de fois où la personne est entrée dans la première zone au cours d'un laps de temps prédéterminé.

10. Procédé selon l'une quelconque revendication précédente, dans lequel le procédé comprend la détermination du fait qu'une durée de regard de la personne (104) dans la première zone (122) dirigé vers chacun du ou des véhicules (110-116) est supérieure à un seuil sur la base des données provenant du ou des capteurs (130), et dans lequel ladite caractéristique de présence comprend ladite durée de regard.

11. Procédé selon l'une quelconque revendication précédente, dans lequel le procédé comprend le fait de déterminer qu'un niveau de stress de la personne (104) dans la première zone (122) est supérieur à un seuil de stress sur la base des données provenant du ou des capteurs (130), et dans lequel ladite caractéristique de présence comprend ledit niveau de stress.

12. Procédé selon l'une quelconque revendication précédente, dans lequel le procédé comprend en outre la détermination de deux caractéristiques de présence ou plus selon les revendications 7 à 11, l'analyse desdites caractéristiques de présence et la détermination dudit repérage de cambriolage de véhicules sur la base de ladite analyse.

13. Dispositif de commande (106) permettant de commander un système d'éclairage extérieur (140) pour prévenir un cambriolage de véhicules d'un ou des véhicules (110-116) dans une zone de surveillance, ladite zone de surveillance comprenant une première zone (122) comprenant le ou les véhicules et une seconde zone (124) adjacente à la première zone, ledit dispositif de commande étant configuré pour :
- commander le système d'éclairage extérieur pour éclairer une zone d'éclairement, comprenant au moins une partie de la première zone et au moins une partie de la seconde zone, conformément à un premier réglage d'éclairage ;
- recevoir des données à partir d'un ou des capteurs (130) surveillant la zone de surveillance ;
- déterminer, sur la base des données provenant du ou des capteurs, une caractéristique de présence d'une personne dans la première zone, ladite caractéristique de présence indiquant un repérage de cambriolage de véhicules ;
- commander, en réponse à la détermination de ladite caractéristique de présence, le système d'éclairage extérieur pour éclairer la zone d'éclairement conformément à un second réglage d'éclairage, différent du premier réglage d'éclairage, **caractérisé en ce que** dans le second réglage d'éclairage :
- la visibilité d'au moins une partie du ou des véhicules est réduite, et
- un niveau d'éclairement dans la seconde zone est supérieur à un niveau d'éclairement dans la première zone.

14. Système de prévention de cambriolage de véhicules d'un ou de des véhicules dans une zone de surveillance, ladite zone de surveillance comprenant une première zone comprenant le ou les véhicules et une seconde zone adjacente à la première zone, ledit système comprenant :
- un système d'éclairage extérieur (140) ;
- un ou des capteurs surveillant la zone de surveillance ;
- le dispositif de commande (106) selon la revendication 13.

15. Produit programme informatique pour un dispositif informatique, le produit programme informatique comprenant un code de programme informatique pour mettre en œuvre le procédé selon l'une quelconque des revendications 1 à 11 lorsque le produit programme informatique est exécuté sur le système selon la revendication 14.
